(19) Europäisches Patentamt / European Patent Office / Office européen des brevets

(11) **EP 2 334 943 B1**

(12) **EUROPÄISCHE PATENTSCHRIFT**

(45) Veröffentlichungstag und Bekanntmachung des Hinweises auf die Patenterteilung:
**26.12.2012 Patentblatt 2012/52**

(21) Anmeldenummer: **09782975.8**

(22) Anmeldetag: **14.09.2009**

(51) Int Cl.:
**F16D 48/06** (2006.01)

(86) Internationale Anmeldenummer:
**PCT/EP2009/061880**

(87) Internationale Veröffentlichungsnummer:
**WO 2010/040621 (15.04.2010 Gazette 2010/15)**

(54) **VERFAHREN ZUM ADAPTIEREN EINER TRENNKUPPLUNG IN EINER TRIEBSTRANGANORDNUNG EINES FAHRZEUGS UND TRIEBSTRANGANORDNUNG**

METHOD FOR ADAPTING A CLUTCH IN A DRIVE TRAIN ARRANGEMENT OF A VEHICLE AND DRIVE TRAIN ARRANGEMENT

PROCÉDÉ D ADAPTATION D UN EMBRAYAGE DE COUPURE DANS UN ENSEMBLE CHAÎNE DE TRANSMISSION D UN VÉHICULE, ET ENSEMBLE CHAÎNE DE TRANSMISSION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **08.10.2008 DE 102008042685**

(43) Veröffentlichungstag der Anmeldung:
**22.06.2011 Patentblatt 2011/25**

(73) Patentinhaber: **Robert Bosch GmbH**
**70442 Stuttgart (DE)**

(72) Erfinder: **SCHENK, Rene**
**71732 Tamm (DE)**

(56) Entgegenhaltungen:
**EP-A1- 1 840 401        EP-A2- 2 014 946**
**WO-A1-2008/064633    WO-A2-03/006841**
**DE-A1-102006 048 355    DE-A1-102006 048 358**

EP 2 334 943 B1

## Beschreibung

Die Erfindung betrifft ein Verfahren zum Adaptieren einer Trennkupplung in einer Triebstranganordnung eines Fahrzeugs, wobei die Triebstranganordnung eine elektrische Maschine, eine Brennkraftmaschine sowie ein Automatikgetriebe mit hydraulischem Drehmomentwandler und Überbrückungskupplung aufweist. Die Erfindung betrifft ferner eine entsprechende Triebstranganordnung.

## Stand der Technik

Triebstranganordnungen eines Fahrzeugs, die eine elektrische Maschine und eine Brennkraftmaschine zur Ausbildung eines Hybridantriebs aufweisen, wobei zwischen der elektrischen Maschine und der Brennkraftmaschine eine Trennkupplung vorgesehen ist, um elektrische Maschine und Brennkraftmaschine im Betrieb voneinander zu trennen oder miteinander zu verbinden, und wobei die Triebstranganordnung ein Automatikgetriebe mit hydraulischem Drehmomentwandler und Überbrückungskupplung nach der elektrischen Maschine aufweist, sind prinzipiell bekannt. Hierbei kann während des Betriebs mit der elektrischen Maschine die Brennkraftmaschine, die keinen eigenständigen Starter aufweist, von der elektrischen Maschine gestartet werden. Die vorbeschriebene Konfiguration erlaubt das elektrische Fahren mit Antrieb durch die elektrische Maschine und geöffneter Trennkupplung. Bei erhöhtem Leistungsbedarf oder sinkender Batteriekapazität muss die Brennkraftmaschine gestartet werden, um den Akku zu laden und/oder die elektrische Maschine zu unterstützen. Dieses Starten geschieht durch Einkuppeln der Brennkraftmaschine in den Triebstrang bei laufender elektrischer Maschine, dergestalt, dass die elektrische Maschine die Brennkraftmaschine antreibt, bis diese aus eigener Kraft läuft. Dieses Starten der Brennkraftmaschine durch die elektrische Maschine muss erfolgen, ohne Störungen im Triebstrang hervorzurufen, insbesondere ohne für den Fahrer spürbare Momentenbeziehungsweise Impulsänderung. Die Trennkupplung zwischen zu startender Brennkraftmaschine und laufender elektrischer Maschine, die als Starter fungiert, wird hierbei so eingeschlossen, dass sie mit einem definierten Schlupfmoment greift. So wird die Brennkraftmaschine beschleunigt, bis sie in etwa die gleiche Drehzahl wie die elektrische Maschine erreicht hat. Das hierfür erforderliche, zusätzliche Moment muss durch die elektrische Maschine bereitgestellt werden. Dies ist dann relativ leicht möglich, wenn die elektrische Maschine über hinreichend Leistungs- und Momentreserven verfügt und die Information über das Kupplungsmoment sehr genau und zuverlässig reproduzierbar ist. Aus diesem Grunde ist nur eine unvollkommene Betriebsführung möglich, wenn lediglich die elektrische Maschine mit dem zum Start der Brennkraftmaschine zusätzlichen Moment angesteuert wird. Informationen über das Kupplungsmoment sind hinsichtlich Betrag als auch hinsichtlich zeitlichem Verlauf (Schleifen der Kupplung) ungenau und können über einen Betriebszyklus stark variieren. Um derartige Fehlerquellen auszuregeln, wird während des Startens der Brennkraftmaschine zusätzlich die Drehzahl der elektrischen Maschine beeinflusst. Hierzu wird zu Beginn des Startvorgangs der Brennkraftmaschine die Überbrückungskupplung des Drehmomentwandlers geöffnet. Hieraus ergibt sich am Drehmomentwandler ein Schlupf, wobei durch eine Schlupfdrehzahl die gewünschte, unveränderte Drehzahl des nachfolgenden Triebstrangs vorgehalten werden muss. Der Schlupf ist hierbei eine Funktion des zu übertragenden Antriebsmoments. Sind dann allerdings das an die elektrische Maschine vorgesteuerte Kupplungsmoment (also das erwartete, der Betriebsführung zugrundeliegende) Kupplungsmoment und das tatsächlich an der Trennkupplung anliegende Kupplungsmoment deutlich unterschiedlich, liegt also hinsichtlich Erwartung und tatsächlichen Gegebenheiten ein nicht vernachlässigbarer Fehler vor, kann die Drehzahlregelung der elektrischen Maschine diesen Fehler nicht hinreichend schnell ausregeln, da die Vorgänge beim Einkuppeln der Trennkupplung und Starten der Brennkraftmaschine sehr schnell und dynamisch ablaufen, selbst dann nicht, wenn wie im Regelfall die jeweiligen Drehzahlen der elektrischen Maschine sehr zuverlässig und leicht messbar und regelbar sind.

Aufgabe der Erfindung ist es daher, ein Verfahren bereitzustellen, um die Genauigkeit des tatsächlichen Kupplungsmoments an der Trennkupplung zu erfassen und die Betriebsführung der Trennkupplung hinsichtlich des erwarteten Kupplungsmoments der Trennkupplung entsprechend steuern zu können, so dass eine Betriebsführung ohne für den Fahrer unerwünschte, spürbare Impuls- oder Momentenänderung möglichst.

WO 03 100684 offenbart ein Verfahren zum Adaptieren einer Trennkupplung.

## Offenbarung der Erfindung

Hierzu wird ein Verfahren zum Adaptieren einer Trennkupplung in einer Triebstranganordnung eines Fahrzeugs vorgeschlagen, wobei die Triebstranganordnung eine elektrische Maschine, eine Brennkraftmaschine sowie ein Automatikgetriebe mit hydraulischem Drehmomentwandler und Überbrückungskupplung aufweist, und wobei die Trennkupplung zwischen der elektrischen Maschine und der Brennkraftmaschine liegt, und wobei während des mittels der elektrischen Maschine erfolgenden Antriebs des Fahrzeugs die Brennkraftmaschine von der elektrischen Maschine gestartet wird. Es sind folgende Schritte vorgesehen:

- In einem Zeitintervall $t_{4,5}$ wird die Trennkupplung im Schlupfbetrieb zum Andrehen der Brennkraftmaschine betrieben,
- in dem Zeitintervall $t_{4,5}$ wird eine erwartete Drehzahländerung der elektrischen Maschine berechnet,
- die durch diese Berechnung erwartete Drehzahländerung wird mit der tatsächlich auftretenden Drehzahländerung auf Abweichung verglichen und
- zum Adaptieren der Trennkupplung wird die ermittelte Abweichung verwendet.

Zur Betriebführung der Trennkupplung beim Anlassen der Brennkraftmaschine wird folglich die Trennkupplung im Schlupfbetrieb betrieben, wobei die hierdurch erwartete Drehzahländerung der elektrischen Maschine aus vorgegebenen, bekannten Parametern berechnet wird, die durch die Konstruktion des Triebstrangs bekannt sind. Die Drehzahl der elektrischen Maschine muss sich nämlich, um das Fahrzeug weiter gleichförmig antreiben zu können und gleichzeitig die Brennkraftmaschine bis zu deren Start beschleunigen zu können, aufgrund des Schlupfbetriebs erhöhen. Die tatsächlich auftretende Drehzahländerung wird gemessen, wobei dieser gemessene Wert mit der durch die Berechnung erwarteten Drehzahländerung verglichen wird. Liegt eine Abweichung vor, kann davon ausgegangen werden, dass diese auf Kupplungsparameter zurückzuführen ist, wodurch diese Abweichung zur Betriebsführung, nämlich zur Adaption derselben zum Betrieb der Trennkupplung, verwendet werden kann.

Erfindungsgemäß werden für die Berechnung der erwarteten Drehzahldifferenz das Drehmoment der elektrischen Maschine $M_{EIM}$, das Drehmoment der dem Wandler zugeordneten Überbrückungskupplung $M_{LC}$, das Drehmoment des Drehmomentwandlers $M_{Wandler}$ und das Drehmoment der Trennkupplung $M_{K1}$ berücksichtigt. Das Moment der elektrischen Maschine kann relativ genau und einfach ermittelt werden und dient letztlich lediglich als Referenzmoment für den Abgleich. Das Drehmoment des Drehmomentwandlers wird beispielsweise durch ein einfaches Verhaltensmodell simuliert. Während des Starts der Brennkraftmaschine treten im Allgemeinen bevorzugt nur kleine Drehzahldifferenzen auf, so dass der Einfluss des Drehmomentwandlers nicht übertrieben groß ist und das einfache Modell genügt.

In einer Verfahrensausbildung wird das für die Ermittlung der Impulsbilanz notwendige Drehmoment $M_{LC}$ der Wandlerüberbrückungskupplung in einem Zeitpunkt $t_1$ bis $t_2$ erfasst, indem diese mit Schlupf betrieben wird und der erfasste Wert über das hierbei beobachtete dynamische Verhalten der Drehzahl der elektrischen Maschine $n_{EIM}$ korrigiert wird, vorzugsweise nach der Beziehung $M_{LC} = M_{EIMt1} - M_{Dynamikkorrektur} + M_{Mittelwertänderung\ elektrische\ Maschine}$.

Erfindungsgemäß wird für die Berechnung der erwarteten Drehzahländerung folgende Beziehung verwendet, wobei die Drehzahländerung einer Änderung der Winkelgeschwindigkeit entspricht:

$$\Delta\omega = \frac{\int_{t4}^{t5} (M_{EIM} - M_{LC} - M_{Wandler} - M_{K1}) \cdot dt}{J}.$$

Der Zähler dieser Beziehung ist die Drehimpulsänderung. Zum Zeitpunkt $t_4$, in dem die Integration der Momentenänderung beginnt, ist die Trennkupplung auf einen stationären Wert eingeschwungen und die Brennkraftmaschine beginnt sich mitzudrehen und zu beschleunigen. Zum Zeitpunkt $t_5$, in dem die Integration beendet wird, hat die Brennkraftmaschine in etwa die Drehzahl der elektrischen Maschine erreicht, so dass gerade noch Schlupf vorliegt. In diesem Intervall zwischen $t_4$ und $t_5$ wird die Impulsbilanz durch die vorgegebene Beziehung berechnet. Eine frühere Berechnung, beispielsweise zu einem Zeitpunkt, in dem die Trennkupplung zwischen Brennkraftmaschine und elektrischer Maschine auf das für den Motorstart nötige Drehmoment gebracht wird, wäre aufgrund hoher Änderungsgeschwindigkeiten fehlerbehaftet, insbesondere dann, wenn die Phasenlage der Eingangsgrößen nicht korrekt ist und aufgrund von in ungünstigen Umständen auftretenden Laufzeiten des CAN-Busses, auf dem die Übertragung der entsprechenden Daten erfolgt. Aufgrund des Umstandes, dass in einem Steuergerät nicht kontinuierlich integriert werden kann, wird in einem Rechenraster eines solchen Steuergerätes die Formel durch Summenbildung folgendermaßen berechnet:

$$\Delta\omega = \frac{\sum_{t4}^{t5} (M_{MEIM} - M_{LC} - M_{Wandler} - M_{K1}) \cdot \Delta t}{J}.$$

$\Delta\omega$ als die Änderung der Geschwindigkeit ist hierbei die erwartete Drehzahländerung und J (im Nenner) ist das Trägheitsmoment des Triebstrangs. Das Trägheitsmoment J des Triebstrangs ist konstruktiv vorgegeben und kann hierbei als Konstante betrachtet werden, da es sich über die Lebensdauer des Triebstrangs nicht oder nur in vernachlässigbarer Form ändert. Die Integralbildung erfolgt demzufolge über eine iterative Summenbildung. In diesen Beziehungen sind das Drehmoment der elektrischen Maschine $M_{EIM}$ das antreibende Moment, daher positiv, das Moment der

Wandlerüberbrückungskupplung $M_{LC}$ ein bremsendes Moment, daher negativ, das Moment des Drehmomentwandlers $M_{Wandler}$ ein bremsendes Moment, daher ebenfalls negativ und das Moment der Trennkupplung $M_{K1}$ ebenfalls ein bremsendes Moment, daher ebenfalls negativ. Es wird demzufolge unter Berücksichtigung der Wirkrichtung die Summe aller Momente gebildet. Ist diese gleich Null, so wird die Drehzahl der elektrischen Maschine konstant bleiben. Ist die Summe aber ungleich Null, dann wird sich die elektrische Maschine beschleunigen oder verzögern. Diese Berechnung gibt die Erwartungshaltung wieder für den beschriebenen Zeitraum $t_4$ bis $t_5$. Sind alle Größen dieser Beziehung korrekt, wird sich die Drehzahl tatsächlich so verhalten, also eine entsprechende Drehzahlmessung in dem Intervall $t_4$, $t_5$ wird keine Abweichung zur vorberechneten Drehzahl ergeben. Stimmt der vorberechnete Wert (der erwartete Wert der Drehzahländerung) nicht ausreichend genau mit dem tatsächlich gemessenem Wert überein, wird angenommen, dass der Fehler durch die Trennkupplung verursacht wurde. Die entsprechende Kennlinie der Trennkupplung wird dann für den nächsten Start der Brennkraftmaschine verändert, so dass der Fehler beim nächsten Start kleiner ausfällt, bevorzugt gleich Null ist. Beispielsweise ist die tatsächliche Drehzahl, wie sich aufgrund der Drehzahlmessung im Intervall $t_4$, $t_5$ ergibt, stärker gefallen als die berechnete, erwartete Drehzahländerung vorhergesagt hat. In diesem Fall hat die Trennkupplung zu viel Moment gestellt und wird jetzt in ihrer Betriebsführung, nämlich in ihrem Schlupf- und Schließungsverhalten, derart verändert, dass sie bei gleichartiger Anforderung weniger Moment einstellt. Derartige Adaptionen werden sinnvollerweise nur bei solchen Starts der Brennkraftmaschine durchgeführt, bei denen keine extremen Randbedingungen in der Betriebsführung des Triebstrangs aufgetreten sind, wie beispielsweise hohe Drehzahlgradienten, Getriebeschaltungen, sehr hohe oder sehr niedrige Drehzahlen. Die Adaption wird nur durchgeführt, wenn der Start der Brennkraftmaschine bei geschlossener Überbrückungskupplung des Drehmomentwandlers ausgelöst, also begonnen wird.

In einer Verfahrensausbildung wird die tatsächliche Drehzahländerung mittels eines Drehzahlsensors und/oder aus den elektrischen Größen der elektrischen Maschine ermittelt. Die tatsächliche Drehzahländerung kann mittels eines Drehzahlsensors in bekannter Art und Weise ermittelt werden, oder aber indirekt aus den elektrischen Größen der elektrischen Maschine, insbesondere nämlich aus Spannung und Stromaufnahme.

Erfindungsgemäβ ist vorgesehen, dass die Trennkupplung eine Kennlinie aufweist und dass zur Adaption der Trennkupplung die Kennlinie verändert wird. Die Kennlinie ist hierbei zur Betriebsführung beispielsweise in einer Steuereinrichtung, insbesondere nämlich im Steuergerät des Kraftfahrzeugs, gespeichert und wird zur Betriebsführung herangezogen. Das gesamte Betriebsverhalten der Trennkupplung kann in einer solchen Kennlinie und/oder in einer Art Kennfeld wiedergegeben werden. Zur Adaption der Trennkupplung, also bei Feststellung einer Drehzahländerung, die tatsächlich höher oder niedriger ist als voraus berechnet, wird die Kennlinie der Trennkupplung verändert und die veränderte Kennlinie für die künftige Betriebsführung weiterer Startvorgänge der Brennkraftmaschine durch die elektrische Maschine herangezogen. Auf diese Weise kann insbesondere auch Alterungsvorgängen der Trennkupplung und/oder weiterer Komponenten des Triebstrangs, soweit diese sich im Verhalten der Trennkupplung niederschlagen und/oder durch eine Betriebsführung der Trennkupplung kompensiert werden können, Rechnung getragen werden. Auf diese Weise ist während der gesamten Lebensdauer des Triebstrangs und seiner Komponenten eine für den Fahrer möglichst komfortable, störungsfreie Betriebsführung des Triebstrangs beim Starten der Brennkraftmaschine durch die elektrische Maschine im Fahrbetrieb möglich.

In einer Verfahrensausbildung ist die Kennlinie von einem Kupplungsweg der Trennkupplung und von einem übertragenen Schlupfmoment der Trennkupplung abhängig. Die Kennlinie spiegelt folglich einen Kupplungsweg zwischen dem Zustand "offen" und dem Zustand "geschlossen" wieder sowie ein jeweils in verschiedenen Zuständen zwischen diesen beiden Zuständen "offen" und "geschlossen" vorliegendes Schlupfmoment.

Weitere vorteilhafte Ausführungsformen ergeben sich aus den Unteransprüchen und aus Kombinationen selben.

**Kurze Beschreibung der Zeichnungen**

Die Erfindung wird nachfolgend anhand eines Ausführungsbeispiels näher erläutert, ohne aber hierauf beschränkt zu sein.

Es zeigen

Figur 1    eine Triebstranganordnung und

Figur 2    ein Momenten- und Drehzahldiagramm zur Triebstranganordnung.

**Ausführungsform(en) der Erfindung**

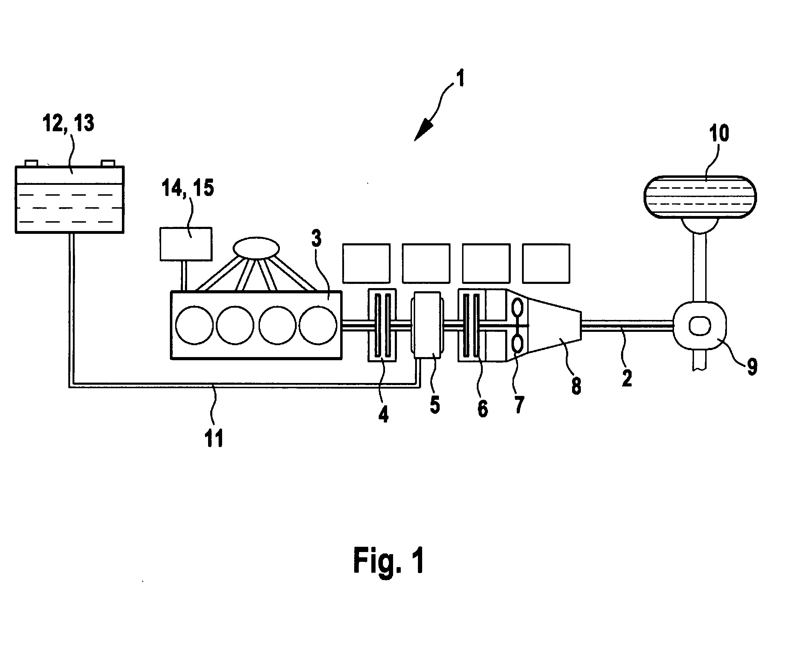

Figur 1 zeigt eine Triebstranganordnung 1 eines nicht dargestellten Hybridfahrzeugs, mit einem Triebstrang 2. Die Triebstranganordnung 1 weist eine Brennkraftmaschine 3 auf, die über eine Trennkupplung 4 mit einer elektrischen Maschine 5 mechanisch wirkverbunden ist. Der elektrischen Maschine 5 im Triebstrang 2 nachgeschaltet ist eine Überbrückungskupplung 6 zur Wirkverbindung eines Drehmomentwandlers 7 eines Automatikgetriebes 8, dem im Triebstrang 2 wiederum nachgeschaltet ein Differential 9 zur Verteilung von Antriebskraft auf Antriebsräder 10 folgt. Die elektrische Maschine 5 ist über elektrische Leitungen 11 mit einem Akkumulator 12 als elektrischem Energiespeicher 13 verbunden. Zur Betriebsführung der Triebstranganordnung 1, insbesondere der Trennkupplung 4, ist eine Steuereinrichtung 14 vorgesehen, die vorzugsweise dem Steuergerät 15 des nicht dargestellten Kraftfahrzeugs zugeordnet ist. Das nicht dargestellte Fahrzeug kann über die Triebstranganordnung 1 entweder rein elektrisch mittels der aus dem

Akkumulator 12 gespeisten elektrischen Maschine 5 angetrieben werden, wobei die Trennkupplung 4 geöffnet ist, also die Brennkraftmaschine 3 vom übrigen Triebstrang 2 entkoppelt, oder über Betrieb mit der Brennkraftmaschine 3, wobei die Trennkupplung 4 geschlossen ist und die elektrische Maschine 5 als Generator geschaltet ist und hierbei den Akkumulator 12 wieder auflädt. Weiter ist ein Betrieb möglich, indem die elektrische Maschine 5 und die Brennkraftmaschine 3 gemeinsam den Triebstrang 2 kraftbeaufschlagen, beispielsweise unter solchen Fahrbedingungen, in denen eine sehr hohe Momentanforderung erfolgt und die Brennkraftmaschine 3 die elektrische Maschine 5 unterstützt.

Die Brennkraftmaschine 3 weist keinen eigenen Starter auf, vielmehr wird die elektrische Maschine 5 als Starter für die Brennkraftmaschine 3 eingesetzt. Dies kann im Stillstand des Fahrzeugs erfolgen, also bei ausgekuppeltem Automatikgetriebe 8 (also in P- oder N-Stellung, insbesondere bei einem Kaltstart der Brennkraftmaschine 3).

Der Start der Brennkraftmaschine 3 kann aber auch aus dem Fahrbetrieb heraus erfolgen, wenn das nicht dargestellte Fahrzeug mittels der elektrischen Maschine 5 angetrieben wird, insbesondere dann, wenn das Steuergerät 15 eine nachlassende Ladekapazität des Akkumulators 12 feststellt und zu dessen Wiederaufladung die elektrische Maschine 5 als Generator betrieben werden und der Antrieb des nicht dargestellten Fahrzeugs sowie der elektrischen Maschine 5 über die Brennkraftmaschine 3 erfolgen soll. Hierzu wird die Trennkupplung 4 geschlossen, wodurch die Brennkraftmaschine 3 soweit beschleunigt wird, bis sie selbsttätig läuft. Die Trennkupplung 4 wird hierzu auf ein bestimmtes Schlupfmoment gesteuert; die Trennkupplung 4 ist folglich nicht vollständig geschlossen, sondern treibt über einen geregelten Schlupf die Brennkraftmaschine 3 an. Die Brennkraftmaschine 3 wirkt hierbei bremsend auf die elektrische Maschine 5, so dass diese zur Aufrechterhaltung des Moments im übrigen Triebstrang 2 und insbesondere zur Momentaufbringung auf die Antriebsräder 10 ein höheres Moment liefern muss, also mit höherer Drehzahl als zuvor betrieben werden muss. Das zusätzliche Moment, das zum Antreiben, nämlich zum Starten der Brennkraftmaschine 3 erforderlich ist, wird durch die elektrische Maschine 5 aufgebracht. Um einen für den Fahrer möglichst nicht spürbaren Betrieb in dieser Startphase der Brennkraftmaschine 3 zu ermöglichen, insbesondere eine plötzliche Impuls- und Momentenänderung zu vermeiden, wird während des Startvorgangs der Brennkraftmaschine 3 die Drehzahl der elektrischen Maschine 5 geregelt. Hierzu wird zu Beginn des Startvorgangs die Überbrückungskupplung 6 zwischen elektrischer Maschine und Drehmomentwandler geöffnet, wodurch sich ein Schlupf am Drehmomentwandler 6 ergibt, der über eine Schlupfdrehzahl vorgehalten wird. Dieser Schlupf ist eine Funktion des zu übertragenden Antriebsmoments. Dies ist erforderlich, weil die elektrische Maschine häufig keine Reserven hat, um zusätzlich zum momentan vorliegenden Fahrbetrieb die Momentaufbringung zum Starten der Brennkraftmaschine 3 unmerklich für den Fahrer bereitzustellen. Die Drehzahl der elektrischen Maschine 5 ist sehr gut messbar und dynamisch regelbar, wodurch sich prinzipiell aus Vorsteuerung des Schlupfes an der Trennkupplung 4 und Regelung der Drehzahl der elektrischen Maschine 5 ein guter, für den Fahrer unmerklicher Startvorgang erzielen lässt. Die Regelung der Drehzahl der elektrischen Maschine ist deswegen erforderlich, weil die zum Kupplungsmoment der Trennkupplung 4 vorliegenden Informationen zu deren Betriebsführung sowohl hinsichtlich Betrag als auch zeitlich im Verlauf des Kupplungsmoments im Vorgang des Schließens der Trennkupplung 4 relativ ungenau sind, abhängig vom Abnützungszustand der Trennkupplung 4 und den Betriebsbedingungen. Der Startvorgang ist umso reibungsloser, je genauer das vorgesteuerte Kupplungsmoment/die geregelte Drehzahl der elektrischen Maschine 5 mit dem tatsächlichen Kupplungsmoment der Trennkupplung 4 übereinstimmt. Ist die Übereinstimmung gering, also der Fehler zwischen vorgesteuertem Kupplungsmoment/vorgesteuerter Drehzahl und dem tatsächlichen Kupplungsmoment groß, kann die Drehzahlregelung der elektrischen Maschine den Fehler nicht schnell genug ausregeln, da der Einkuppelvorgang extrem dynamisch ist. Es ist deshalb eine Adaption erforderlich, mit der die Trennkupplung 4 in ihrer Betriebsführung hinsichtlich der Abweichung des tatsächlichen Kupplungsmoments vom vorgesteuerten Kupplungsmoment erfolgen kann.

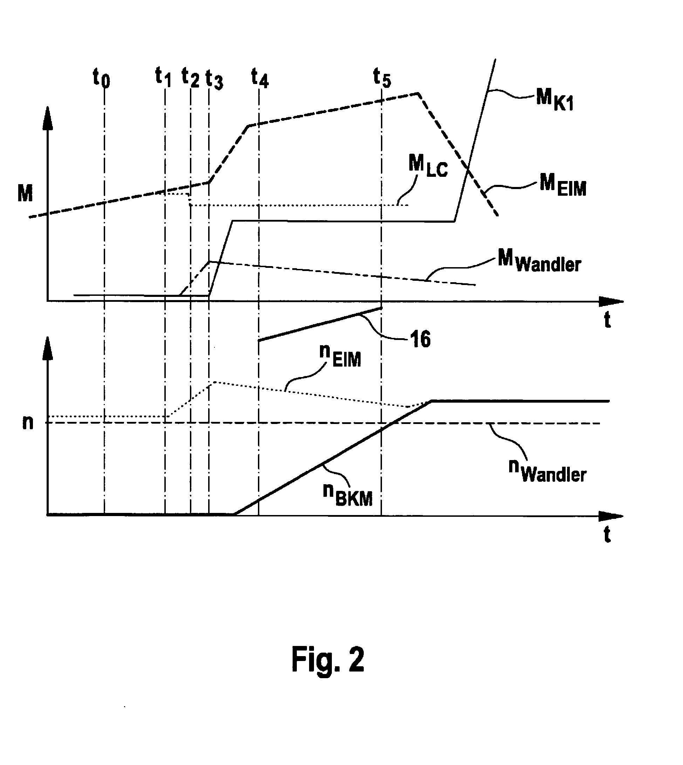

Figur 2 zeigt in dem oberen Teilbild Drehmomentverläufe M und im unteren Teilbild Drehzahlverläufe n, wobei das Drehmoment M beziehungsweise die Drehzahl n hierbei auf der Ordinate (Y-Achse) ist und der zeitliche Verlauf des Wiederstartvorgangs der Brennkraftmaschine 3 (vergleiche Figur 1) aus dem elektrischen Fahrbetrieb des nicht dargestellten Fahrzeugs heraus auf der Abszisse (X-Achse) dargestellt ist. Hierbei bezeichnen die einzelnen Zeitpunkte folgendes:

$t_0$: Auslösung des (Wieder-)Startvorgangs der Brennkraftmaschine 3 aus dem elektrischen Fahrbetrieb mittels elektrischer Maschine 5 (in Figur 2 nicht dargestellte Bezugszeichen beziehen sich auf Figur 1). Bei der Auslösung des Starts wird die Überbrückungskupplung 6 des Drehmomentwandlers 7 geöffnet, bis diese mit Schlupf arbeitet. Dieser Zustand der Überbrückungskupplung 7 im Schlupfbetrieb wird für den restlichen zeitlichen Verlauf des Starts beibehalten.

$t_1$: Erkennen des Schlupfes der Überbrückungskupplung 6 des Drehmomentwandlers 7 über die Drehzahldifferenz zwischen elektrischer Maschine 5 und Turbinendrehzahl des Drehmomentwandlers 7 (da die Überbrückungskupplung 6 nicht mehr starr mit der Turbine des Drehmomentwandlers 7 verbunden ist, erhöht sich die Drehzahl der elektrischen Maschine 5). Die Geschwindigkeit, mit der sich die Drehzahl der elektrischen Maschine 5 erhöht, wird durch das überschüssige Drehmoment und das Trägheitsmoment der elektrischen Maschine 5 und der damit fest verbundenen Teile bestimmt. Um das tatsächlich von der Überbrückungskupplung 6 übertragene Drehmoment zu bestimmen, muss das Moment der elektrischen Maschine 5 sowie der Anteil, der für die Beschleunigung verwendet wird, bestimmt werden.

$t_2$: Bestimmung der Drehzahlerhöhung der elektrischen Maschine 5 gegenüber dem Zeitpunkt $t_1$ und Umrechnung unter Einbeziehung des für die Triebstranganordnung 1 bauartbedingten (und damit im Wesentlichen gleichbleibend konstanten) Trägheitsmoments, nach der Formel $M = J \cdot \Delta\omega/\Delta t$, wobei M das Drehmoment ist, J das Trägheitsmoment der Komponenten des Triebstrangs 2, $\omega$ die Winkelgeschwindigkeit und t die Zeit. Da sich während der Bestimmung dieser Drehzahlerhöhung, also im Wesentlichen während der Messzeit, auch das Moment der elektrischen Maschine 5 ändern kann, wird die Änderung des Moments der elektrischen Maschine 5 im Zeitintervall $t_1$ bis $t_2$ gegenüber seinem Wert zum Zeitpunkt $t_1$ gemittelt und zu dem ermittelten Moment (siehe vorstehend) addiert. Somit ergibt sich das Moment der in stationärem Zustand betriebenen Überbrückungskupplung 6 des Drehmomentwandlers 5 durch die Beziehung $M_{LC} = M_{EIMt1} - M_{Dynamikkorrektur} + M_{Mittelwertänderung\ elektrische\ Maschine}$.

$t_3$: Die Trennkupplung 4 wird auf das für den Start der Brennkraftmaschine 3 erforderliche Drehmoment gebracht, also mit Schlupf betrieben.

$t_4$: Die Trennkupplung 4 ist auf einem stationären Wert eingeschwungen, wobei sich die Brennkraftmaschine 3 zu drehen und zu beschleunigen beginnt.

$t_5$: Die Brennkraftmaschine 3 hat annähernd die Drehzahl der elektrischen Maschine 5 erreicht, wobei gerade noch Schlupf in der Trennkupplung 4 vorliegt.

Zur Adaption des Betriebs der Trennkupplung 4, wie vorstehend beschrieben, wird sinnvollerweise das zeitliche Intervall zwischen den Zeitpunkten $t_4$ und $t_5$ herangezogen, indem dort eine Drehimpuls-Bilanz berechnet wird. Eine solche Berechnung unmittelbar nach $t_3$ wäre aufgrund der dort noch hohen Änderungsgeschwindigkeiten der Einflussgrößen fehlerbehaftet, insbesondere dann, wenn die Phasenlage der Eingangsgrößen nicht korrekt ist.

Zur Verdeutlichung die Benennung der Graphen von Figur 2:

$M_{EIM}$: Moment der elektrischen Maschine.

$M_{LC}$: Moment der Überbrückungskupplung.

$M_{Wandler}$: Moment des Drehmomentwandlers 7.

$M_{K1}$: Moment der Trennkupplung 4.

Es ergibt sich hieraus eine Momentenbilanz 16.

Im unteren Teilbild der Figur 2 ist entsprechend dargestellt die Drehzahl $n_{EIM}$ der elektrischen Maschine 5, als $n_{BKM}$ die Drehzahl der Brennkraftmaschine 3 und als $n_{Wandler}$ die Drehzahl des Drehmomentwandlers 7, jeweils abgetragen gegen die Zeit t.

Es ergibt sich für die Berechnung der erwarteten Drehzahländerung $\Delta n$, die einer Änderung der Winkelgeschwindigkeit $\Delta\omega$ entspricht, zwischen den Zeiträumen $t_4$ und $t_5$ folgende Beziehung, wobei der Zähler des dargestellten Bruchs die Drehimpulsänderung in dem betrachteten Zeitintervall bezeichnet:

$$\Delta\omega = \frac{\int_{t4}^{t5}(M_{EIM} - M_{LC} - M_{Wandler} - M_{K1})\cdot dt}{J}.$$

Eine Steuereinrichtung 14, insbesondere ein Steuergerät 15, kann aufgrund der elektronischen Gegebenheiten nicht kontinuierlich integrieren, so dass in seinem Rechenraster die Formel durch Summenbildung über einzelne Zeitpunkte im zeitlichen Intervall $t_4$ bis $t_5$ erfolgt, nach folgender Beziehung:

$$\Delta\omega = \frac{\sum_{t4}^{t5}(M_{MEIM} - M_{LC} - M_{Wandler} - M_{K1})\cdot \Delta t}{J}.$$

Der so berechnete Wert wird mit der tatsächlichen Drehzahländerung verglichen, wie sie im zeitlichen Intervall $t_4$ bis $t_5$ vorliegt und ermittelt wurde. Ist die Übereinstimmung nicht hinreichend genau, wird angenommen, dass der beobachtete Fehler (die entsprechende Differenz) durch die Trennkupplung 4 (Einflussgröße $M_{K1}$) verursacht wurde. Die Kennlinie der Trennkupplung 4 wird dann für die nächsten Starts verändert, so dass der beobachtete Fehler das nächste Mal, also beim nächsten Wiederstart der Brennkraftmaschine 3 über die elektrische Maschine 5 im elektrischen Fahrbetrieb des Fahrzeugs, kleiner wird. Beispielsweise ist die Drehzahl stärker gefallen als erwartet. Die Trennkupplung 4 hat demzufolge zu viel Moment gestellt und wird jetzt in ihrem Betriebsverhalten so verändert, dass sie künftig bei gleichbleibender Anforderung weniger Moment einstellt. Es ist sinnvoll, nach Einbau einer neuen Trennkupplung 4 die Adaption zunächst in relativ großen Schritten vorzunehmen, die Betriebführung der Kupplung als entsprechend grob anzulernen, um eine schnelle Kompensation des dann zwangsläufig auftretenden Fehlers zu erreichen. Nachdem hinreichend viele solche Lernvorgänge/Adaptionen stattgefunden haben, wird die Zahl der Lernschritte reduziert und das Schrittmaß/Adaptionsmaß verkleinert. Hierdurch wird bei eingeschwungener Adaption eine hohe Robustheit gegen mögliche Ausreißer erreicht.

Sinnvollerweise wird die Adaption nur bei solchen Starts durchgeführt, bei denen keine extremen Randbedingungen aufgetreten sind, insbesondere keine hohen Drehzahlgradienten, Getriebeschaltungen, sehr hohe oder sehr niedrige Drehzahlen. Die Adaption kann nur dann zuverlässig durchgeführt werden, wenn die Startauslösung bei geschlossener Überbrückungskupplung 6 des Drehmomentwandlers 7 ausgelöst wird (vergleiche Zeitpunkt $t_0$ in Figur 2).

**Patentansprüche**

1. Verfahren zum Adaptieren einer Trennkupplung (4) in einer Triebstranganordnung (1) eines Fahrzeugs, bei dem die Triebstranganordnung (1) eine elektrische Maschine (5), eine Brennkraftmaschine (3) sowie ein Automatikgetrieb (8) mit hydraulischem Drehmomentwandler (7) und Überbrückungskupplung (6) aufweist, wobei die Trennkupplung (4) zwischen der elektrischen Maschine (5) und der Brennkraftmaschine (3) liegt und wobei während des mittels der elektrischen Maschine (5) erfolgenden Antriebs des Fahrzeugs die Brennkraftmaschine (3) von der elektrischen Maschine (5) gestartet wird, mit folgenden Schritten:

   - in einem Zeitintervall ($t_{4,5}$) wird die Trennkupplung im Schlupfbetrieb zum Andrehen der Brennkraftmaschine betrieben,
   - in dem Zeitintervall ($t_{4,5}$) wird eine erwartete Drehzahländerung der elektrischen Maschine berechnet,
   - wobei für die Berechnung der erwarteten Drehzahländerung das Drehmoment der elektrischen Maschine ($M_{EIM}$), das Drehmoment der dem Wandler zugeordneten Überbriickungskupplung ($M_{LC}$), das Drehmoment des Drehmomentwandlers ($M_{wandler}$) und das Drehmoment der Trennkupplung ($M_{KI}$) berücksichtigt werden,
   - die durch Berechnung erwartete Drehzahländerung wird mit der tatsächlich auftretenden Drehzahländerung auf Abweichung verglichen, wobei für die Berechnung der erwarteten Drehzahländerung folgende Beziehung verwendet wird:

$$\Delta \omega = \frac{\int_{t4}^{t5} (M_{EIM} - M_{LC} - M_{Wandler} - M_{K1}) \cdot dt}{J}$$

$$\Delta\omega = \frac{\sum_{t4}^{t5}(M_{MEIM} - M_{LC} - M_{Wandler} - M_{K1}) \cdot \Delta t}{J},$$

wobei $\Delta\omega$ die erwartete Drehzahländerung und J das Trägheitsmoment der elektrischen Maschine(5)und der damit fest verbundenen Teile ist,
- zum Adaptieren der Trennkupplung (4) wird die ermittelte Abweichung verwendet,
- wobei die Trennkupplung (4) eine Kennlinie aufweist und wobei zur Adaption der Trennkupplung (4) die Kennlinie verändert wird.

2. Verfahren nach einem der vorhergehenden Ansprüche, **dadurch gekennzeichnet, dass** die tatsächliche Drehzahländerung mittels eines Drehzahlsensors und/oder aus den elektrischen Größen der elektrischen Maschine (5) ermittelt wird.

3. Verfahren nach einem der vorhergehenden Ansprüche, **dadurch gekennzeichnet, dass** die Kennlinie von einem Kupplungsweg der Trennkupplung (4) und einem übertragenem Schlupfmoment der Trennkupplung (4) abhängig ist.

**Claims**

1. Method for adapting a separating clutch (4) in a drive-train arrangement (1) of a vehicle, in which method the drive-train arrangement (1) has an electric machine (5), an internal combustion engine (3) and an automatic transmission (8) with a hydraulic torque converter (7) and a lock-up clutch (6), the separating clutch (4) lying between the electric machine (5) and the internal combustion engine (3), and, during the drive of the vehicle which takes place by means of the electric machine (5), the internal combustion engine (3) being started by the electric machine (5), having the following steps:

- at a time interval ($t_{4,5}$), the separating clutch is operated in slipping mode in order to start the internal combustion engine,
- at the time interval ($t_{4,5}$), an expected rotational-speed change of the electric machine is calculated,
- the torque of the electric machine ($M_{EIM}$), the torque of the lock-up clutch ($M_{LC}$) which is assigned to the converter, the torque of the torque converter ($M_{Wandler}$) and the torque of the separating clutch ($M_{K1}$) being taken into consideration for the calculation of the expected rotational-speed change,
- the calculated expected rotational-speed change is compared for a deviation with the actually occurring rotational-speed change, the following relationship being used for the calculation of the expected rotational-speed change:

$$\Delta \omega = \frac{\int_{t4}^{t5} (M_{EIM} - M_{LC} - M_{Wandler} - M_{K1}) \cdot dt}{J}$$

$$\Delta\omega = \frac{\sum_{t4}^{t5}(M_{MEIM} - M_{LC} - M_{Wandler} - M_{K1}) \cdot \Delta t}{J},$$

$\Delta\omega$ being the expected rotational-speed change and J being the moment of inertia of the electric machine (5) and of the parts which are connected fixedly thereto,

- the determined deviation is used to adapt the separating clutch (4),
- the separating clutch (4) having a characteristic curve, and the characteristic curve being changed in order to adapt the separating clutch (4).

2.  Method according to one of the preceding claims, **characterized in that** the actual rotational-speed change is determined by means of a rotational-speed sensor and/or from the electric variables of the electric machine (5).

3.  Method according to one of the preceding claims, **characterized in that** the characteristic curve is dependent on a clutch travel of the separating clutch (4) and a transmitted slip moment of the separating clutch (4).

**Revendications**

1.  Procédé d'adaptation d'un embrayage de coupure (4) dans un agencement de chaîne cinématique (1) d'un véhicule automobile, dans lequel l'agencement de chaîne cinématique (1) comporte un moteur électrique (5), un moteur à combustion interne (3) ainsi qu'une boîte de vitesses automatique (8) dotée d'un convertisseur de couple (7) hydraulique et d'un embrayage de court-circuitage (6), l'embrayage de coupure (4) étant positionné entre le moteur électrique (5) et le moteur à combustion interne (3) et le moteur à combustion interne (3) étant démarré par le moteur électrique (5) lorsque l'entraînement du véhicule automobile se produit à l'aide du moteur électrique (5), avec les étapes suivantes :

    l'embrayage de coupure est entraîné en mode d'accouplement à glissement pendant un intervalle de temps ($t_{4,\,5}$) pour faire tourner le moteur à combustion interne ;
    une variation attendue de la vitesse de rotation du moteur électrique est calculée pendant un intervalle de temps ($t_{4,\,5}$) ;
    le couple de rotation du moteur électrique ($M_{EIM}$), le couple de rotation de l'embrayage de court-circuitage ($M_{LC}$) associé au convertisseur, le couple de rotation du convertisseur de couple de rotation ($M_{Wandler}$) et le couple de rotation de l'embrayage de coupure ($M_{K1}$) sont pris en compte dans le calcul de la variation attendue de la vitesse de rotation ;
    la variation de la vitesse de rotation attendue dans le cadre du calcul est comparée à la variation réelle de la vitesse de rotation à la recherche d'un écart, la formule suivante étant utilisée pour le calcul de la variation attendue de la vitesse de rotation :

$$\Delta\omega = \frac{\int_{t4}^{t5}(M_{EIM} - M_{LC} - M_{Wandler} - M_{K1})\cdot dt}{J}\,.$$

$$\Delta\omega = \frac{\sum_{t4}^{t5}(M_{MEIM} - M_{LC} - M_{Wandler} - M_{K1})\cdot \Delta t}{J}\,,$$

    $\Delta\omega$ étant la variation attendue de la vitesse de rotation et J étant le couple d'inertie du moteur électrique (5) et des parties y étant fixement reliées ;
    l'écart déterminé étant utilisé pour adapter l'embrayage de coupure (4) ;
    l'embrayage de coupure (4) présentant une courbe caractéristique et la courbe caractéristique étant modifiée pour adapter l'embrayage de coupure (4).

2.  Procédé selon l'une quelconque des revendications précédentes, **caractérisé en ce que** la variation réelle de la vitesse de rotation est détectée à l'aide d'un capteur de vitesse de rotation et/ou à partir des grandeurs électriques du moteur électrique (5).

3.  Procédé selon l'une quelconque des revendications précédentes, **caractérisé en ce que** la courbe caractéristique est fonction de la course d'embrayage de l'embrayage de coupure (4) et d'un couple de glissement transmis de l'embrayage de coupure (4).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03100684 A